**Europäisches Patentamt**

**European Patent Office**

**Office européen des brevets**

(19)

(11) Veröffentlichungsnummer: **0 098 806**
**B1**

(12) # EUROPÄISCHE PATENTSCHRIFT

(45) Veröffentlichungstag der Patentschrift:
**29.01.86**

(51) Int. Cl.⁴: **G 03 B 27/32**

(21) Anmeldenummer: **83810299.4**

(22) Anmeldetag: **01.07.83**

(54) Hellraum-Vergrösserungsgerät.

(30) Priorität: **07.07.82 GB 8219622**

(43) Veröffentlichungstag der Anmeldung:
**18.01.84 Patentblatt 84/3**

(45) Bekanntmachung des Hinweises auf die Patenterteilung:
**29.01.86 Patentblatt 86/5**

(84) Benannte Vertragsstaaten:
**BE CH DE FR GB IT LI**

(56) Entgegenhaltungen:
**US - A - 4 053 219**

(73) Patentinhaber: **CIBA-GEIGY AG, Klybeckstrasse 141, CH-4002 Basel (CH)**

(72) Erfinder: **Turner, George F. A. M., Monks Acres Woolmongers Lane Blackmore, Ingatestone Essex CM4 OJX (GB)**
Erfinder: **Moore, Michael H., 67 Coventry Road, Ilford Essex (GB)**
Erfinder: **Twigger, Ernest J., Gara 60 Rowan Walk, Hornchurch Essex (GB)**

## Beschreibung

Die Erfindung betrifft ein Hellraumvergrösserungsgerät gemäss Oberbegriff des Anspruchs 1.

In den letzten Jahren wird es immer schwieriger, in einem Wohnhaus üblicher Bauart einen Raum einzurichten, der hinreichend abgedunkelt werden kann, um als Dunkelkammer dienen zu können, in welcher Kopien von Negativen auf lichtempfindlichem Kopiermaterial hergestellt werden können. Auf dem Markt befinden sich eine Anzahl von Vergrösserungsgeräten, bei denen das Lampenhaus und der Vorlagenhalter auf einem Kasten oder einem zeltartigen Gehäuse angebracht sind, welches das Bildprojektionsfeld umschliesst, auf welches die Abbildung der Vorlage fokussiert wird, um das Bild zu erzeugen und das Kopiermaterial zu belichten. Manchmal wird dafür gesorgt, dass innerhalb des Gehäuses eine Behandlungswanne untergebracht ist, aber dies führt zu einem unförmigen Gehäuse, um für die Aufnahme der Wanne genügend Platz im Gehäuseinneren zu bieten. Andererseits kann die das Innere umschliessende Gehäusewandung einen Schlitz aufweisen, durch welchen hindurch das belichtete Filmmaterial in eine benachbarte Wanne eingeführt werden kann, die sich ausserhalb des Gehäuses befindet. Doch hat es sich als schwierig erwiesen, eine solche Transfereinrichtung lichtdicht zu machen. Auch hat es sich wegen des begrenzten Raumes im Gehäuseinneren als schwierig erwiesen, die belichtete Kopie durch einen Schlitz in der Gehäusewand hindurchzustecken, da die Bewegungsfreiheit eines durch ein Armloch in der Wandung des Gehäuseinneren gesteckten Armes sehr beschränkt ist.

Aufgabe der vorliegenden Erfindung ist es daher, ein photographisches Hellraumvergrösserungsgerät zu verwirklichen, in welchem eine belichtete Kopie leicht und in lichtdichter Weise in eine Behandlungswanne eingebracht werden kann.

Diese Aufgabe wird gemäss der vorliegenden Erfindung durch das im Patentanspruch 1 beschriebene Hellraumvergrösserungsgerät gelöst. Vorzugsweise umfasst der Deckel der Behandlungswanne eine Einrichtung, durch welche Behandlungsflüssigkeit in die Wanne gegossen werden kann, ohne dass der Deckel geöffnet werden muss.

In einer Ausführungsform der Erfindung besteht der Deckel der Behandlungswanne aus einem lichtdurchlässigen Kunststoff, welcher einen Filterfarbstoff enthält, so dass der Entwicklungsprozess durch den Deckel der Wanne hindurch beobachtet werden kann. Auch die Seitenwände und der Boden der Wanne können aus ähnlichem Material bestehen.

Weitere Merkmale bevorzugter Ausführungsformen des Vergrösserungsgeräts nach der Erfindung sind in den kennzeichnenden Teilen der Unteransprüche 2 bis 5 beschrieben.

Gemäss den kennzeichnenden Merkmalen der Unteransprüche 2 und 3 wird der Flansch des Behälters, wenn er in das flanschaufnehmende Glied

des Behälters eingeführt ist, darin in lichtdichter Weise gehaltert. Am meisten bevorzugt ist ein Flansch mit Schwalbenschwanzquerschnitt, der mit dem entsprechend geformten Flanschfeststellglied zusammenwirkt, wobei die obere Flanschkante, die nicht vom Flanschfeststellglied umschlossen wird, länger ist als die ihr gegenüberliegende Kante.

Vorzugsweise ruht der Deckel der Behandlungswanne in Schliessstellung in lichtdichter Weise innerhalb der Flansche des Behälters.

Die Einrichtung zum Eingiessen der Behandlungsflüssigkeit in die Behandlungswanne umfasst vorzugsweise eine Öffnung mit einem darunter befindlichen Trog, der sich genügend weit über den Öffnungsumfang hinaus erstreckt, um kein chemisch wirksames Licht auf eine in der Behandlungswanne unterhalb des Troges befindliche Kopie fallen zu lassen.

Auch ist es am besten, wenn die Behandlungswanne an einer Gehäusewand des Vergrösserungsgeräts vorgesehen ist, die der die Armlöcher enthaltenden Wand gegenüber liegt.

Die beiliegende Zeichnung dient zur Veranschaulichung der Erfindung. Darin zeigt

Fig. 1 einen Seitenriss eines photographischen Vergrösserungsgeräts nach der Erfindung, in welchem eine Gehäusewand eine photographische Behandlungswanne trägt,

Fig. 2 eine perspektivische Ansicht der Behandlungswanne von oben,

Fig. 3 eine Schnittansicht der Wanne entlang einer in Fig. 2 durch A-A angedeuteten Ebene,

Fig. 4 eine perspektivische Bodenansicht der Behandlungswanne nach Fig. 2, benachbart einer Öffnung in der Rückwand eines photographischen Hellraumvergrösserungsgeräts, und

Fig. 5 eine Schnittansicht der Behandlungswanne nach Fig. 2 in Stellung in der Öffnung des Vergrösserungsgeräts nach Fig. 1 mit dem Deckel der Wanne im teilgeöffnetem Zustand.

In allen Figuren haben gleiche Bezugsziffern die gleiche Bedeutung.

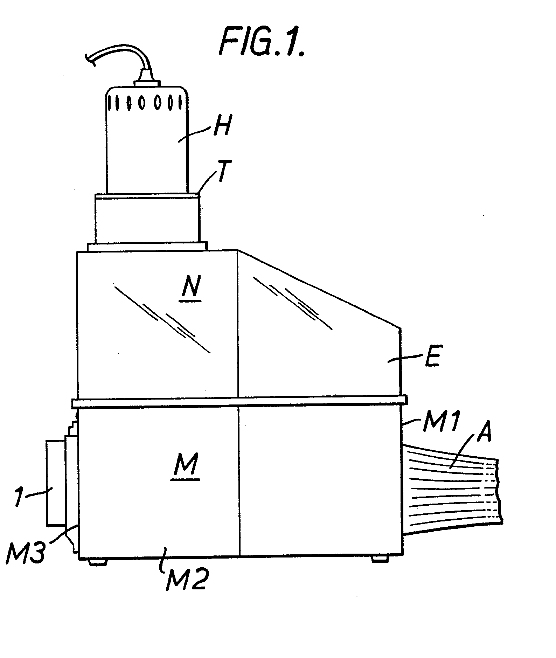

Das in Fig. 1 gezeigte photographische Vergrösserungsgerät umfasst einen unteren kastenartigen Gehäuseabschnitt M, der aus lichtundurchlässig pigmentiertem Polystyrol besteht. Auf den Gehäuseabschnitt M ist ein entfernbarer oberer Gehäuseteil N aus tiefrot gefärbtem Polystyrol montiert, und auf diesem wiederum ein entfernbares Lampenhaus H, unter welchem ein Vorlagenträger T vorgesehen ist. Unter dem Vorlagenträger T befindet sich eine in Fig. 1 nicht sichtbare Linse von konstanter Brennweite.

Der Abschnitt M wird durch vier Gehäusewände M1, M2, M3 und M4 verschlossen (wobei M4 durch M2 verdeckt ist). In der Gehäusewand M1 sind zwei lichtdichte Armlöcher A vorgesehen, von denen nur eines sichtbar ist. In der Gehäusewand M3 befindet sich eine photographische Behandlungswanne 1.

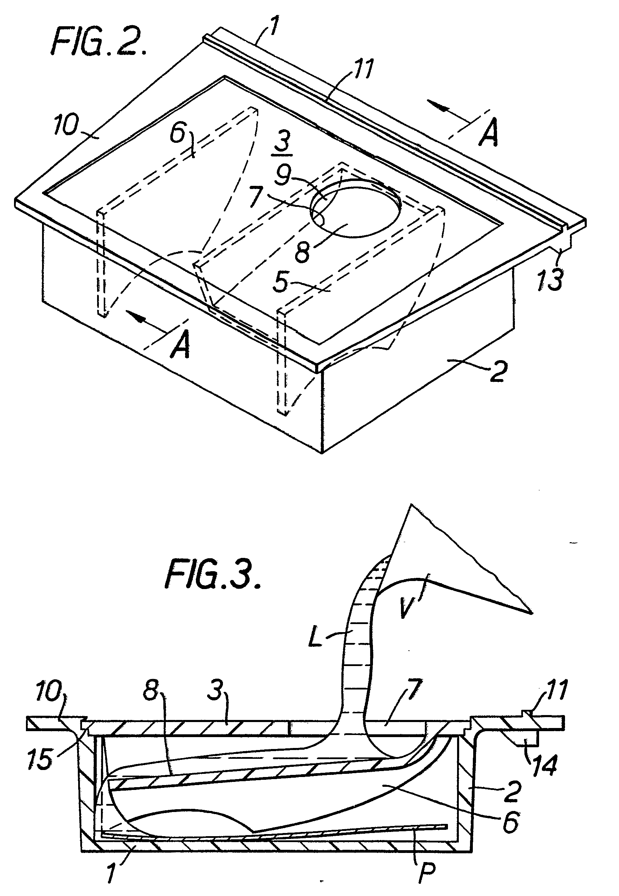

Die in Fig. 2 perspektivisch dargestellte Behandlungswanne 1 umfasst einen Flüssigkeitsbehälterteil 2 aus dunkelrot gefärbtem Polystyrol und ein Deckelteil 3, welches in das obere Ende des Behälters passt, wie dies in Fig. 3 deutlich erkennbar ist. Der Deckel 3 besteht ebenfalls aus dunkelrot gefärbtem Polystyrol. Von der Unterseite des Deckels 3 erstrecken sich zwei ebenfalls aus dunkelrot gefärbtem Polystyrol bestehende Querwände 5 und 6 abwärts.

Im Deckel 3 befindet sich eine Öffnung 7 oberhalb eines Troges 8, der als Seitenwände die Querwand 5 und eine ebenfalls aus dunkelrot gefärbtem Polystyrol gebildete Wandung 9 aufweist.

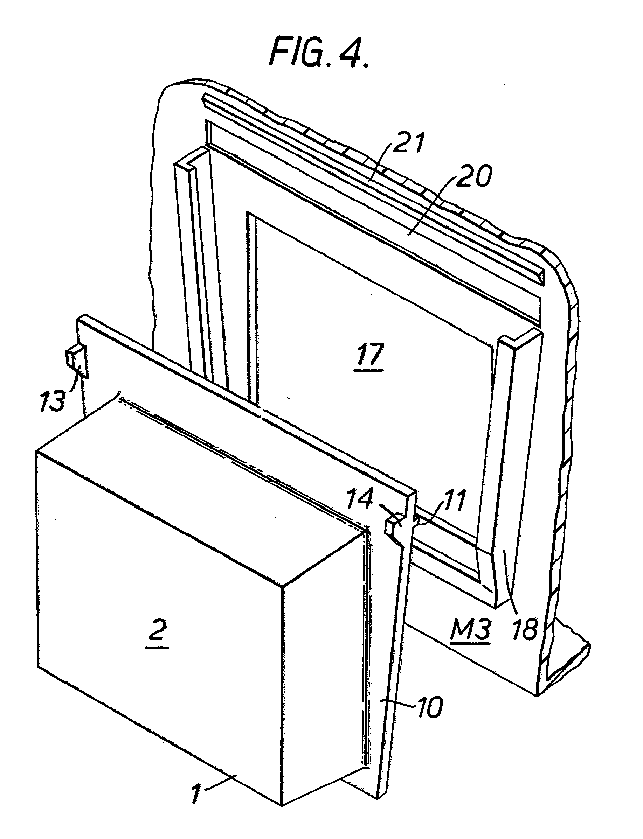

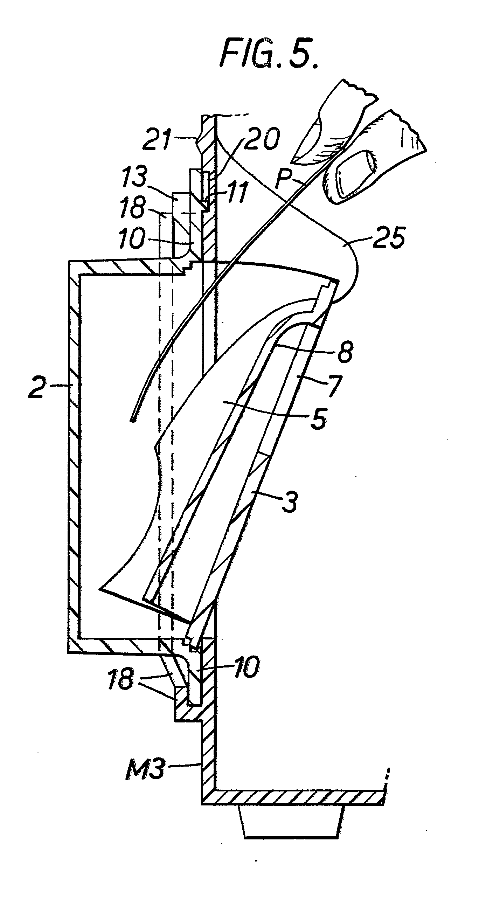

Der Behälter 2 ist von einem Flansch 10 umgeben. Längs eines Teils dieses Flansches befindet sich an dessen Oberseite ein Anschlagglied 11, dessen Funktion in Fig. 4 gezeigt ist. Auf dem gleichen Flanschteil, jedoch an dessen Unterseite, befindet sich ein Nockenglied 13. In der Tat sind, wie aus Fig. 4 ersichtlich, zwei Nockenglieder 13 und 14 vorgesehen, deren Funktion in Fig. 5 dargestellt ist.

Der Deckel 3 ist in Fig. 3 den Behälter 2 in lichtdichter Weise fest verschliessend gezeigt, wobei er auf einer doppelstufigen Aussparung 15 am oberen Ende des Behälters 2 aufsitzt. Auch wird in dieser Figur gezeigt, wie Behandlungsflüssigkeit L aus einem Gefäss V gegossen wird und durch die Öffnung 7 in den Trog 8 einfällt und von diesem in den Bodenraum des Behälters 2 über ein Blatt P photographischen Kopiermaterials hinabfliesst, das sich auf dem Boden des Behälters 2 befindet.

Da der Trog 8 sich beträchtlich über den Umfang der Öffnung 7 hinaus erstreckt, verhindert er, dass ungefiltertes Licht das Blatt P photographischen Materials erreichen kann.

In Fig. 4 ist die Unterseite des Behälters 2 der Behandlungswanne 1 gezeigt. In dieser Figur soll die Behandlungswanne 1 gerade in die in der Gehäusewand M3 des Vergrösserungsgeräts E vorhandene Öffnung 17 eingefügt werden.

Die Einrichtung zur Halterung der Behandlungswanne 1 in ihrer Stellung an der Gehäusewand M3 umfasst ein Flanschaufnahmeglied 18 mit einer einwärts abgewinkelten Leiste, die sich zu beiden Seiten und unterhalb der Öffnung 17 erstreckt. Über dieser Öffnung 17 befindet sich eine längliche Ausnehmung 20 und über dieser ein Anschlagglied 21. Sowohl der Flansch 10 um den Behälter wie auch das Flanschaufnahmeglied 18 haben leicht schwalbenschwanzförmigen Querschnitt, um die Einführung des Behälterflansches in das Flanschaufnahmeglied 18 zu erleichtern.

In Fig. 5 ist die Behandlungswanne 1 in ihrer Stellung in der Gehäusewand M3 des Vergrösserungsgeräts E gezeigt. Der Flansch 10 des Behälters ist dabei in das Flanschaufnahmeglied 18 in der genannten Wand M3 eingedrungen. Das Anschlagglied 11 auf dem Flansch 10 des Behälters befindet sich dann in der Ausnehmung 20 der Seitenwand M3. Die beiden Nockenglieder 13 und 14 sind teilweise in die oberen Enden des Flanschaufnahmegliedes 18 eingeführt. Hierdurch wird der Behälter 2 in lichtdichter Weise in der Gehäusewand M3 die Öffnung 17 überdeckend festgehalten.

Der Deckel 3 der Wanne 1 ist geöffnet und seine obere Kante liegt an Deckelhaltegliedern 25 an, die an der Innenseite der Wand M3 des Vergrösserungsgeräts angebracht sind und von denen nur eines zu sehen ist. Weiter ist ein Blatt belichteten photographischen Materials P gezeigt, das gerade zwischen den Deckelhaltegliedern 25 hindurch in die Behandlungswanne eingeführt wird.

Bei Verwendung des Vergrösserungsgeräts nach der Erfindung wird nun eine leere Behandlungswanne, wie sie in Fig. 2 gezeigt ist, an ein Vergrösserungsgerät E der in Fig. 1 gezeigten Art angeschlossen. Das Anschlagglied 21 dient hierbei dazu, den Flansch 10 des Behälters 2 abwärts in das Flanschaufnahmeglied 18 hineinzulenken und das Anschlagglied 11 in der Ausnehmung 20 zu lagern.

Sobald die Behandlungswanne an der Seitenwand M3 des Vergrösserungsgeräts fest angebracht ist, ist das letztere in dem in Fig. 1 gezeigten Zustand fertig zum Gebrauch. Der Benutzer öffnet nun den Deckel 3 der Behandlungswanne 1 unter Zuhilfenahme der Öffnung 7, die weit genug ist, um einen Finger hineinzustecken. Eine Vorlage wird nun auf den Vorlagehalter T gelegt und die Lampe im Lampenhaus H eingeschaltet, um ein Bild innerhalb des eingerahmten Feldes an der Basis des Vergrösserungsgeräts E zu fokussieren. Dieses Bild kann durch den halbdurchsichtigen Deckelteil N des Vergrösserungsgerätes E erblickt werden. Sobald das Bild eingestellt ist, wird die Lampe ausgeschaltet, und ein Bogen photographischen Kopiermaterials wird der lichtdichten Kassette desselben, die sich im Inneren der Gehäusewände des Vergrösserungsgeräts befindet, entnommen. Dieser Bogen wird mittels der durch die lichtdichten Armlöcher A hindurchgesteckten Hände in das Projektionsfeld gelegt und die Lampe wiederum eingeschaltet. Das photographische Material wird nun während der erforderlichen Zeit belichtet und die Lampe dann wieder ausgeschaltet. Der Benutzer führt dann den belichteten Bogen des photographischen Kopiermaterials P, wie in Fig. 5 gezeigt, in die Behandlungswanne 1 ein, und zwar so, dass die mit Emulsion beschichtete Seite des Bogens nach oben weist, wenn der Bogen auf dem Boden des Behälters 2 aufliegt.

Der Deckel 3 der Wanne 1 wird dann durch den Benutzer geschlossen und die Wanne 1 von der Wand M3 entfernt, wobei das Anschlagglied 21 dazu verwendet wird sicherzustellen, dass das Anschlagglied 11 des Behälters die Ausnehmung 20 vollständig verlassen hat.

Hierauf wird, wie in Fig. 3 gezeigt, Behandlungsflüssigkeit aus dem Gefäss V in die Behandlungswanne 1 durch die Öffnung 7 und über den Trog 8 eingegossen. Die zugespitzte Unterkante der Querwand 6 (und auch diejenige der in Fig. 3 nicht sichtbaren Querwand 5) sorgt dafür, dass der Bogen P photographischen Kopiermaterials flach auf dem Boden des Behälters 2 aufliegt. Beim Herabfliessen der Flüssigkeit L vom Trog 8 wird so die Oberfläche des Bogens P des photographischen Kopiermaterials überflutet. Sobald hinreichend Flüssigkeit in den Behälter 2 eingegeben ist, kann die Behandlungswanne 1 seitlich hin- und hergeschwenkt werden, um die Behandlungsflüssigkeit L im Behälter zu schütteln. Die Querwände 5 und 6 tragen zum Durchschütteln der Flüssigkeit bei. Sobald das Bild vollständig entwickelt ist, was man durch die Wandung der Behandlungswanne 1 hindurch sehen kann, wird der Deckel 3 abgehoben und nach Entfernen der Flüssigkeit L ein weiterer Behandlungsschritt, z.B. das Fixieren, durchgeführt, oder es wird, wenn als Flüssigkeit L ein Monobad verwendet wurde, der Bogen P anschliessend gewaschen.

Sowohl die Wandung des Behälters 2 als auch diejenige des Deckels 3 ist hinreichend lichtdurchlässig, dass der Benutzer das Bild auf dem Bogen P während seines Entwickelns erblicken kann. Da jedoch die Wandung dieser beiden Teile lichtfiltrierendes Material enthält, nämlich den im Polystyrol vorhandenen roten Farbstoff, wirkt das durch die Wandung durchtretende Licht nicht auf das Kopiermaterial ein und belichtet es nicht weiter.

Es ist verständlich, dass die in der Gehäusewand M3 des Vergrösserungsgeräts E befindliche Behandlungswanne nicht lichtdurchlässig zu sein braucht; da aber die Behandlung unter Tageslicht durchgeführt wird, ist die Wanne nur für nichtaktinisches Licht lichtdurchlässig, um eine Über- oder Unterentwicklung zu verhindern.

## Patentansprüche

1. Hellraum-Vergrösserungsgerät (E), bei welchem das Bildprojektionsfeld von festen Wänden (M) eines Gehäuses mit mindestens einem Armloch (A) umschlossen ist, dadurch gekennzeichnet, dass eine der Wände eine Öffnung aufweist, an die in lichtdichter Weise eine für chemisch wirksames Licht undurchlässige Behandlungswanne (1) mit einem Deckel (3) anschliessbar bzw. entfernbar ist, wobei der Deckel bei an der Wand angeschlossener Wanne zwecks Eingabe von Kopiermaterial vom Inneren des Gehäuses her geöffnet und geschlossen werden kann.

2. Hellraum-Vergrösserungsgerät nach Anspruch 1, dadurch gekennzeichnet, dass die Behandlungswanne (1) einen einen Flüssigkeitsbehälter (2) umgebenden Flansch (10) aufweist, und dass die Wand des Vergrösserungsgeräts, an welcher die Behandlungswanne anschliessbar ist, ein Flanschaufnahmeglied (18) mit einwärts gefalzter Leiste umfasst.

3. Hellraum-Vergrösserungsgerät nach Anspruch 2, dadurch gekennzeichnet, dass an der Unterseite des Flansches im Bereich des oberen Randes Nockenglieder (13, 14) ausgebildet sind, welche mit den genannten Leisten zusammenwirken, um den Flansch gegen die angrenzende Gehäusewand zu drücken.

4. Hellraum-Vergrösserungsgerät nach einem der Ansprüche 1 bis 3, dadurch gekennzeichnet, dass der Deckel (3), wenn die Behandlungswanne (1) sich am Gehäuse befindet, durch Abwärtsziehen seiner oberen Kante geöffnet werden kann, wobei diese Kante auf an der Innenseite der mit der Behandlungswanne zusammenwirkenden Gehäusewand befestigten Deckeltraggliedern (25) zu ruhen kommt, wobei der Deckel um seine Bodenkante geschwenkt wird.

5. Hellraum-Vergrösserungsgerät nach einem der Ansprüche 1 bis 4, dadurch gekennzeichnet, dass der Deckel (3) der Behandlungswanne (1) eine Öffnung (8) zum Hineingiessen von Behandlungsflüssigkeit in den Behälter aufweist, deren Grösse zur Einführung eines Fingers genügt, um die obere Kante des Deckels abwärts bewegen zu können, wenn die Behandlungswanne sich am Gehäuse befindet.

## Claims

1. A daylight enlarger (E) in which the image projection area is enclosed by solid walls (M) of a casing having at least one arm hole (A), characterized in that one of the walls has an aperture to which an acting light opaque processing dish (1) having a lid (3) can be attached in a light-tight manner or from which said processing dish can be removed, which lid, when the dish is attached to the wall, can be opened and closes from inside the casing for the purpose of inserting print material.

2. A daylight enlarger according to Claim 1, characterized in that the processing dish (1) has a flange (10) surrounding a liquid container (2) and that the wall of the enlarger to which the processing dish can be attached comprises a flange locating member (18) with a return.

3. A daylight enlarger according to Claim 2, characterized in that camming members (13, 14) are present on the underside of the flange in the area of the top edge, which camming members operate together with said returns in order to press the flange against the adjacent casing wall.

4. A daylight enlarger according to any one of Claims 1 to 3, characterized in that the lid (3), when the processing dish (1) is located on the casing, can be opened by pulling down its to edge so that this edge rests on lid support members (25) which are attached to the inner side of the casing wall which operates together with the processing dish, the lid pivotting on its bottom edge.

5. A daylight enlarger according to any one of Claims 1 to 4, characterized in that the lid (3) of the processing dish (1) has an aperture (8) through which processing liquid may be poured into the container, the size of the aperture being sufficient for the insertion of a finger in order to pull down the top edge of the lid when processing dish is located on the casing.

## Revendications

1. Agrandisseur utilisable à la lumière du jour (E) dans lequel le champ de projection de l'image est entouré de parois solides (M) d'un carter comportant au moins un trou (A) prévu pour le passage des bras, caractérisé par le fait que l'une des parois présente un orifice sur lequel est connectable ou déconnectable un bac de traitement (1) opaque à la lumière actinique (chimiquement active) comportant un couvercle (3), ledit couvercle pouvant être ouvert et fermé de l'intérieur du carter lorsque le bac est connecté sur la paroi en vue de l'introduction de matériel de copie.

2. Agrandisseur utilisable à la lumière du jour selon la revendication 1, caractérisé par le fait que le bac de traitement (1) présente une bride (10) entourant un réservoir de liquide (2) et par le fait que la paroi de l'agrandisseur sur lequel le bac de traitement est connectable, englobe un élément de réception d'une bride (18) comportant une bordure angulée vers l'intérieur.

3. Agrandisseur utilisable à la lumière du jour selon la revendication 2, caractérisé par le fait que sur le côté inférieur de la bride dans la zone de la bordure supérieure des cames (13, 14) sont formées qui coopèrent avec les bordures citées plus haut pour comprimer la bride contre la paroi de carter limitrophe.

4. Agrandisseur utilisable à la lumière du jour selon l'une des revendications 1 à 3, caractérisé par le fait que le couvercle (3), lorsque le bac de traitement (1) se trouve sur le carter, peut être ouvert en retirant vers le bas son arête supérieure, ce qui a pour effet que cette arête vient reposer sur le côté intérieur des éléments (25) portant le couvercle fixés sur la paroi du carter qui coopère avec le bac de traitement, tandis que le couvercle bascule autour de son arête placée au fond.

5. Agrandisseur utilisable à la lumière du jour selon l'une des revendications 1 à 4, caractérisé par le fait que le couvercle (3) du bac de traitement (1) présente un orifice (8) destiné à l'introduction du liquide de traitementt dans le réservoir, orifice dont la dimension suffit à l'introduction d'un doigt, afin de permettre le déplacement vers le bas de l'arête supérieure du couvercle lorsque le bac de traitement se trouve sur le carter.

# FIG.1.

FIG. 2.

FIG. 3.

# FIG. 4.

# FIG.5.